# EUROPÄISCHE PATENTANMELDUNG

(11) **EP 1 207 670 A2**
(43) Veröffentlichungstag der Anmeldung: **22.05.2002**
(21) Anmeldenummer: 01440361.2
(22) Anmeldetag: 26.10.2001
(51) Int. Cl.: H04L 29/12

(54) **Dienst zur automatischen Übermittlung von Paketdaten**

(30) Priorität: 16.11.2000 DE 10056823
(71) Anmelder: ALCATEL, 75008 Paris (FR)
(72) Erfinder: Katzschner, Lothar, Prof. Dr., 70469 Stuttgart (DE); Sutter, Emmanuel, 53173 Bonn (DE); Lemke, Andreas, 70195 Stuttgart (DE); Zeller, Wolfgang, 71144 Steinenbronn (DE)
(74) Vertreter: Rausch, Gabriele, Dr.

(57) **Zusammenfassung**

Die Erfindung betrifft ein Verfahren zur Durchführung eines Dienstes zur automatischen Übermittlung von Paketdaten an einen Teilnehmer (S1, S2) eines Kommunikationsnetzes, welches ein Paketdatennetz (INT) umfasst, insbesondere eines Internetinformationsdienstes, wobei die zu übermittelnden Paketdaten in einer Netzeinrichtung (IS) des Kommunikationsnetzes gespeichert sind und über das Paketdatennetz (INT) übermittelt werden, wobei für den Fall, dass das Kommunikationsnetz auch ein leitungsvermittelndes Fernsprechnetz (TN) umfasst, die Netzeinrichtung (IS) durch einen Fernsprechanruf eines ersten Teilnehmers (S1, S2) an einen weiteren Teilnehmer (S1, S2) dazu veranlasst wird, einem der Teilnehmer (S1, S2) Paketdaten zu übermitteln, sowie ein Kommunikationsnetz, einen Informationsrechner und ein Programmmodul dazu.

## Beschreibung

Die Erfindung betrifft ein Verfahren zur Durchführung eines Dienstes zur automatischen Übermittlung von Paketdaten nach dem Oberbegriff des Anspruchsl, sowie ein Kommunikationsnetz, einen Informationsrechner und ein Programmmodul dafür.

Im öffentlichen Fernsprechnetz (PSTN) ist ein Dienst zur Übermittlung der Rufnummer (engl.: Calling Line Identification Presentation, CLIP) des anrufenden Teilnehmers verfügbar. Bei diesem im Dokument "ITU-T Recommendation Q.951" spezifizierten Dienst wird diese Rufnummer im Zuge des Verbindungsaufbaus zum Fernsprechendgerät des anzurufenden Teilnehmers übermittelt und kann dort z.B. mittels einer LCD-Anzeige des Fernsprechendgeräts dargestellt werden. Der angerufene Teilnehmer kann den anrufenden Teilnehmer aufgrund der übermittelten Rufnummer identifizieren. In modernen Fernsprechendgeräten kann auch unmittelbar der Name des anzurufenden Teilnehmers auf der LCD-Anzeige dargestellt werden, sofern eine Verknüpfung seiner Rufnummer mit seinem Namen existiert.. Dieser ursprünglich für das ISDN (Integrated Services Digital Network) definierte Dienst ist auch für Teilnehmer des Mobilfunks und seit einiger Zeit sogar für Teilnehmer mit analogem Netzanschluss verfügbar. In der oben erwähnten Norm ist weiterhin ein Dienst zur Anzeige der Rufnummer des angerufenen Teilnehmers (engl.: Connected Line Presentation; COLP) beim anrufenden Teilnehmer spezifiziert. Dieser Dienst (COLP) ist allerdings meist nicht realisiert, da die Anzeige der Rufnummer des angerufenen Teilnehmers beim anrufenden Teilnehmer lediglich eine Kontrolle der Übereinstimmung der gewünschten Rufnummer mit der gewählten Rufnummer ermöglicht. Analog zum Dienst der Anzeige der Rufnummer (CLIP) gibt es für die Teilnehmer die Möglichkeit, diesen Dienst zu sperren.

Teilnehmer des Internets haben die Möglichkeit, sogenannte Heimseiten oder home pages einzurichten oder einrichten zu lassen, die auf bestimmten Rechnern oder Servern des Internets abgespeichert sind. Diese Heimseiten stellen bestimmte Webseiten oder web pages dar, die durch eine eindeutige Adresse, der sogenannten (einheitlichen) Ressourcenkennung (engl.: Unified Ressource Location, URL) identifizierbar ist. Ein Teilnehmer des Internets, der eine bestimmte Heimseite eines anderen Teilnehmers empfangen möchte, übermittelt die entsprechende Ressourcenkennung mit der Internetadresse seines Internet-Endgeräts, im folgenden kurz IP-Adresse genannt, ins Internet. Die gewünschte Heimseite wird dann in Form von Datenpaketen, sogenannten IP-Datagrammen, zum genannten Internet-Endgerät übermittelt und wird dort mit Hilfe eines bestimmten Programms, kurz Browser genannt, zur Anzeige gebracht. Das Internet erlaubt damit, anders als der oben beschriebene Dienst zur Rufnummernanzeige, die Übermittlung umfangreicher und individuell gestalteter, visueller Information.

In der Patentschrift US 5724412 werden Einrichtungen und ein Verfahren beschrieben, bei denen beim Anruf eines Fernsprechteilnehmers bestimmte Adressinformation, beispielsweise eine oben genannte Ressourcenkennung (URL) an den anrufenden oder angerufenen Teilnehmer übermittelt werden. Die Übermittlung der Adressinformation erfolgt dabei gleichermaßen wie die Übermittlung der Rufnummer beim oben beschriebenen Dienst zur Rufnummernübermittlung durch Signalisierung vom Fernsprechnetz zum Fernsprechteilnehmer. Diese Adressinformation kann der Fernsprechteilnehmer dann dazu verwenden, entsprechende im Internet gespeicherte Information des Gesprächspartners, beispielsweise seine Heimseite, von einem Internet-Endgerät aus aufzurufen. Bei diesem Verfahren muss die Eingabe der vom Fernsprechendgerät empfangenen Adressinformation manuell am Internet-Endgerät erfolgen, soweit nicht teilnehmerseitig spezielle Vorrichtungen vorhanden sind, die die Übermittlung der Adressinformation vom Fernsprechendgerät zum Internet-Endgerät erlauben.

Ein Teilnehmer des Internets erhält eine gewünschte Webseite üblicherweise durch Aufruf dieser Webseite, d.h. nach Übermittlung der entsprechenden Ressourcenkennung (URL). Allerdings sind seit einiger Zeit auch Verfahren im Internet bekannt, sogenannte Push-Verfahren, bei denen ein Server unaufgefordert Webseiten an bestimmte Teilnehmer übermittelt. Mit Hilfe eines solchen Verfahrens ist es möglich, ausgewählten Teilnehmern aktuellen Nachrichten entweder unverzüglich bei Eintreffen dieser Nachrichten oder in bestimmten Zeitabständen zu übermitteln, ohne dass diese Teilnehmer vorher entsprechende Webseiten aufrufen müssen. Hiervon geht die Erfindung aus.

Aufgabe der Erfindung ist es, einen Dienst zu beschreiben, bei dem eine automatische Übermittlung von Paketdaten in Zusammenhang mit einem Fernsprechanruf an Teilnehmer erfolgt, ohne dass teilnehmerseitig außer einem Fernsprechendgerät und einem davon unabhängigen Paketdaten-Endgerät zusätzliche Einrichtungen notwendig sind. Eine weitere Aufgabe der Erfindung ist es, geeignete netzseitige Mittel zur Durchführung dieses Dienstes zu beschreiben.

Erfindungsgemäß wird diese Aufgabe durch ein Verfahren nach der Lehre des Anspruchs 1, ein Kommunikationsnetz nach der Lehre des Anspruchs 10, einen Informationsrechner nach der Lehre des Anspruchs 11 und ein Programmmodul nach der Lehre der Anspruchs 13 gelöst.

Das Internet als weltweit zugängliches Paketdatennetz ist das am weitesten verbreitete Paketdatennetz. Die vorliegende Beschreibung beschränkt sich bei der Betrachtung von Paketdatennetzen im folgenden auf das Internet, ohne dass sich die Erfindung darauf beschränkt. Die Erfindung kann insbesondere auch mit einem sogenannten Intranet realisiert werden, welches nach gleichen Prinzipien wie das Internet arbeitet, jedoch örtlich z.B. auf Firmenstandorte einer Firma, beschränkt ist.

Grundgedanke der Erfindung ist die netzseitige Verknüpfung von Rufnummern der Fernsprechendgeräte und von IP-Adressen der Internet-Endgeräte von Teilnehmern oder von Paketdaten. Aufgrund dieser Verknüpfung werden im Zuge eines Fernsprechanrufs die IP-Adressen der Internet-Endgeräte derjenigen an dem Anruf beteiligten Teilnehmer ermittelt, die bestimmte Paketdaten erhalten sollen.

In einer ersten Ausführung wird bei einem Fernsprechanruf eines anrufenden Teilnehmers ermittelt, ob Paketdaten des anzurufenden Teilnehmers zur Übermittlung an den anrufenden Teilnehmer vorliegen. Falls entsprechende Paketdaten vorliegen, werden diese Paketdaten an das Internet-Endgerät des anrufenden Teilnehmers übermittelt.

In einer weiteren Ausführung wird bei einem Fernsprechanruf eines anrufenden Teilnehmers ermittelt, ob Paketdaten des anrufenden Teilnehmers zur Übermittlung an das Internet-Endgerät des anzurufenden Teilnehmers vorliegen. Falls entsprechende Paketdaten vorliegen, werden diese Paketdaten an das Internet-Endgerät des angerufenen Teilnehmers übermittelt.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnungen weiter erläutert:
- Fig.1: zeigt ein erfindungsgemäßes Kommunikationsnetz, bestehend aus dem Internet und aus dem öffentlichen Fernsprechnetz,
- Fig.2: zeigt ein beispielhaftes Blockschaltbild mit den wesentlich am erfindungsgemäßen Verfahren beteiligten Netzeinrichtungen,
- Fig.3: zeigt beispielhafte Einrichtungen des Internets zur Ausführung einer ersten Variante eines erfindungsgemäßen Verfahrens und
- Fig.4: zeigt beispielhafte Einrichtungen des Internets zur Ausführung einer zweiten Variante eines erfindungsgemäßen Verfahrens.

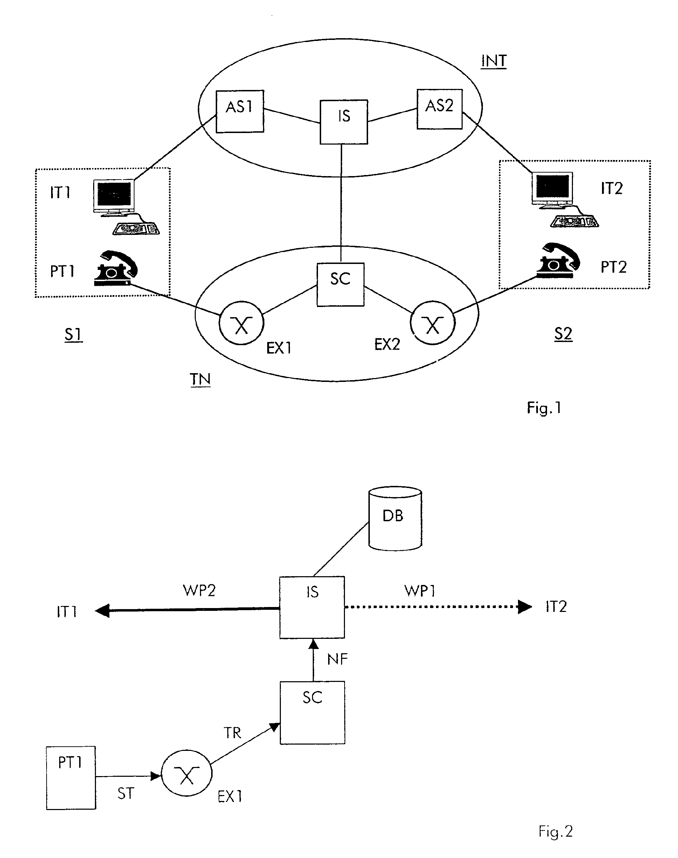

Fig.1 zeigt ein Kommunikationsnetz, bestehend aus dem Internet und aus dem (öffentlichen) Fernsprechnetz TN, sowie einer ersten (Teilnehmer-) Endeinrichtungen S1 und einer zweiten (Teilnehmer-)Endeinrichtung S2. Das Internet INT weist einen ersten Zugangsrechner AS1 und einen zweiten Zugangsrechner AS2 sowie einen Informationsrechner IS auf. Das Fernsprechnetz TN weist eine erste Vermittlungsstelle EX1 und eine zweite Vermittlungsstelle EX2 sowie einen Steuerrechner SC auf. Die Endeinrichtungen S1 und S2 beinhalten ein erstes Internet-Endgerät IT1 bzw. ein zweites Internet-Endgerät IT2 sowie ein erstes Fernsprechendgerät PT1 bzw. ein zweites Fernsprechendgerät PT2. Die Fernsprechendgeräte PT1 und PT2 sind mit den Vermittlungsstellen EX1 bzw. EX2 verbunden. Die Vermittlungsstellen EX1 und EX2 sind beide mit dem Steuerrechner SC verbunden. Die Kommunikation des Fernsprechnetzes TN mit dem Internet INT erfolgt über eine Verbindung des Steuerrechners SC mit dem Informationsrechner IS, der darüber hinaus jeweils mit den Zugangsrechnern AS1 und AS2 verbunden ist. Die Zugangsrechner AS1 und AS2 sind mit dem Internet-Endgerät IT1 bzw. IT2 verbunden.

Hier wird der allgemeine Fall angenommen, dass die Fernsprechendgeräte PT1 und PT2 jeweils mit verschiedenen Vermittlungsstellen EX1 bzw. EX2 und die Internet-Endgeräte IT1 und IT2 jeweils mit verschiedenen Zugangsrechnern AS1 bzw. AS2 verbunden sind. In Spezialfällen können beide Fernsprechendgeräte PT1 und PT2 mit der selben Vermittlungsstelle und/oder beide Internet-Endgeräte IT1 und IT2 mit dem selben Zugangsrechner verbunden sein.

Der von dem ersten Fernsprechendgerät IT1 der ersten Endeinrichtung S1 anrufende Teilnehmer wird im folgenden abkürzend als anrufender Teilnehmer S1 und der von dem zweiten Fernsprechendgerät der zweiten Endeinrichtung S2 anzurufende Teilnehmer im folgenden abkürzend als anzurufender Teilnehmer S2 bezeichnet. Es wird davon ausgegangen, dass beide Teilnehmer S1 und S2 den oben beschriebenen Dienst zur automatischen Übermittlung von Paketdaten eingerichtet haben; d.h. die Verknüpfung der Rufnummer des Fernsprechendgeräts PT1 oder PT2 und der Internetadresse des Internet-Endgeräts IT1 bzw. IT2 ist für jeden Teilnehmer bekannt.

Hier wird zunächst davon ausgegangen, dass die Internet-Endgeräte IT1 und IT2 beider Teilnehmer S1 und S2 stets jeweils (an das Internet) angeschaltet (engl.: online) sind; d.h. sie weisen eine Kommunikationsverbindung mit dem Internet INT auf und sind damit jederzeit bereit, Paketdaten zu senden und zu empfangen. Die in Fig.1 gezeigten Verbindungen stellen logische Kommunikationsverbindungen dar, die physikalisch durchaus anders geführt sein können. Insbesondere stellen die in Fig.1 getrennt dargestellten Verbindungen der verschiedenen Endgeräte eines Teilnehmers zum Fernsprechnetz TN und zum Internet, beispielsweise die Verbindungen des Fernsprechendgeräts PT1 und des Internet-Endgeräts IT1, physikalisch häufig streckenweise dieselbe Leitung dar, über die z.B. mit Hilfe des bekannten ISDN-Verfahrens für den digitalen Zugang zum öffentlichen Fernsprechnetz oder eines ADSL-Verfahrens (Asynchronous Digital Subscriber Line) gleichzeitig zwei unabhängige Kommunikationsverbindungen eingerichtet werden können. Dabei wird hier eine dieser Verbindungen als Fernsprechverbindung und die andere Verbindung als Internetverbindung genutzt.

Die Vermittlungsstellen EX1 und EX2 informieren den Steuerrechner SC über jeden ankommenden Anruf von einem an die Vermittlungsstelie EX1 oder EX2 angeschlossenen Fernsprechendgerät PT1 bzw. PT2. Der Steuerrechner SC meldet dem Informationsrechner IS die Rufnummern des anrufenden Teilnehmers S1 und des anzurufenden Teilnehmers S2. Daraufhin überprüft der Informationsrechner IS, ob Paketdaten eines der genannten Teilnehmer zur Übermittlung an den anderen der genannten Teilnehmer vorliegen und übermittelt diese Paketdaten über die Zugangsrechner AS1 oder AS2 an die Internet-Endgeräte IT1 bzw. IT2 der Teilnehmer S1 bzw. S2.

Der Steuerrechner SC dient hier im wesentlichen als Schnittstellenrechner des Fernsprechnetzes TN zum Internet, der die von den Vermittlungsstellen EX1 und EX2 erhaltenen Informationen an den Informationsrechner IS weiterreicht. Der Steuerrechner SC enthält außerdem Funktionen zur Überprüfung der Vollständigkeit der zum Informationsrechner IS zu übermittelnden Daten. Darüber hinaus nimmt er die Ermittlung der Gebühren vor, mit denen die Teilnehmer S1 und/oder S2 belastet werden und leitet diese Daten an eine hier nicht gezeigte Einrichtung zur Rechnungsstellung weiter.

Der Steuerrechner SC kann als zentraler Rechner, Rechnerverbund oder als dezentraler Rechnerverbund realisiert werden. Als dezentraler Rechnerverbund können die einzelnen Rechner auch jeweils direkt den Vermittlungsstellen EX1 und EX2 zugeordnet werden oder unmittelbar in die Vermittlungsstellen EX1 und EX2 integriert sein. Auch der Informationsrechner IS kann als Rechnerverbund realisiert werden. Weiter ist es möglich, die Funktionen des Steuerrechners SC und die Funktionen des Informationsrechners IS in einem gemeinsamen Rechner oder Rechnerverbund zusammenzuführen.

Im folgenden wird der prinzipielle Ablauf des unter Fig. 1 beschriebenen Verfahrens detailliert beschrieben. Fig. 2 zeigt dazu die erste Vermittlungsstelle EX1, den Steuerrechner SC, den Informationsrechner IS, das erste Internet-Endgerät IT1, das zweite Internet-Endgerät IT2 sowie das erste Fernsprechendgerät PT1 aus Fig. 1. Zusätzlich ist noch eine mit dem Informationsrechner IS verbundene Datenbank DB eingezeichnet. Ein vom ersten Fernsprechendgerät PT1 zur Vermittlungsstelle EX1 gerichteter Pfeil symbolisiert ein SETUP-Signal ST, ein von der ersten Vermittlungsstelle EX1 zum Steuerrechner SC gerichteter Pfeil symbolisiert ein Triggersignal TR, ein vom Steuerrechner SC zum Informationsrechner IS gerichteter Pfeil symbolisiert ein Notifizierungssignal NF, ein vom Informationsrechner IS zum ersten Internet-Endgerät IT1 gerichteter Pfeil symbolisiert zweite Paketdaten WP2 und ein vom Informationsrechner IS zum zweiten Internet-Endgerät IT2 gerichteter, gestrichelt eingezeichneter Pfeil symbolisiert optionale erste Paketdaten WP1.

Für den im folgenden beschriebenen Ablauf des erfindungsgemäßen Verfahrens zur Durchführung eines Dienstes zur automatischen Übermittlung von Paketdaten wird ohne Beschränkung der Allgemeinheit angenommen, dass der Teilnehmer S1 anrufender Teilnehmer und der Teilnehmer S2 anzurufender Teilnehmer ist.

Der Teilnehmer S1 wählt die Rufnummer des Teilnehmers S2. Während oder nach der Wahl wird in der Vermittlungsstelle EX1 geprüft, ob der rufende Teilnehmer S1 Teilnehmer des genannten Dienstes ist. Um die Durchführung des Dienstes anzustoßen, ist die Übermittlung des Triggersignals TR an den Steuerrechner SC notwendig, welche die Rufnummer des anzurufenden Teilnehmers S2 und des anrufenden Teilnehmers S1 enthält. Die Rufnummer des anrufenden Teilnehmers S1 ist der Vermittlungsstelle EX1 bekannt, die Rufnummer des anzurufenden Teilnehmers S2 wird aus der Wahlinformation in dem SETUP-Signal des Teilnehmers S1 entnommen; gegebenenfalls ist weitere Wahlinformation aus nachfolgenden INFO- Signalen nachzureichen. Ein Anstoß des Dienstes ist auch nach Erhalt einer sogenannten Address-Complete-Message (ACM) möglich.

Der Steuerrechner SC prüft das erhaltene Triggersignal TR auf Vollständigkeit. Anschließend übermittelt der Steuerrechner SC das die vollständigen Rufnummern der Teilnehmer S1 und S2 enthaltende Notifizierungssignal NF an den Informationsrechner IS. Der Informationsrechner IS ermittelt die in der Datenbank DB enthaltenen, für den anrufenden Teilnehmer S1 bestimmten Paketdaten WP2 des anzurufenden Teilnehmers S2, die IP-Adresse des ersten Internet-Endgeräts IT1 des anrufenden Teilnehmers S1 und übermittelt anschließend die Paketdaten WP2.

Zusätzlich oder optional ermittelt der Informationsrechner IS in der Datenbank DB vorliegende, für den anzurufenden Teilnehmer S2 bestimmte Paketdaten WP1 des anrufenden Teilnehmers S1, die IP-Adresse des zweiten Internet-Endgeräts IT2 des anzurufenden Teilnehmers S2 und übermittelt anschließend die Paketdaten WP1.

Bisher wurde davon ausgegangen, dass die Paketdaten WP1 oder WP2 bereits fest in der Datenbank DB gespeichert sind. Alternativ kann jedoch bestimmte Basisinformation in der Datenbank gespeichert sein, aus der erst zu gegebener Zeit im Informationsrechner IS die entsprechenden Paketdaten WP1 oder WP2 erzeugt werden. Dabei kann der Informationsrechner IS auch aktuelle Daten, beispielsweise Bildsequenzen, der Teilnehmer S1 oder S2 erhalten, die dann als Paketdaten WP1 bzw. WP2 oder als Bestandteil der entsprechenden Paketdaten übermittelt werden.

Es ist auch möglich, dass der Steuerrechner SC nicht von der ersten Vermittlungsstelle EX1, an welcher der anrufende Teilnehmer S1 angeschlossen ist, sondern von der zweiten Vermittlungsstelle EX2, an welche der anzurufende Teilnehmer S2 angeschlossen ist, durch ein Triggersignal TR informiert wird. Dabei ist von Vorteil, dass der zweiten Vermittlungsstelle EX2 beide Rufnummern, die Rufnummer des anrufenden Teilnehmers S1 und die Rufnummer des anzurufenden Teilnehmers S2, immer vollständig bekannt sind und insbesondere die vollständige Rufnummer des anzurufenden Teilnehmers S2 nicht erst in weiteren Schritten ermittelt werden muss. Nachteilig ist, dass für den Fall, dass keine Verbindung zwischen den Vermittlungsstellen EX1 und EX2 hergestellt werden kann, beispielsweise bei Überlastung entsprechender Leitungen, der beschriebene Dienst nicht ausgeführt werden kann.

In einer vorteilhaften Weiterbildung kann für den beschriebenen Dienst, entweder individuell von jedem Teilnehmer oder generell, festgelegt werden, zu welchem Zeitpunkt eines Fernsprechanrufs die Übermittlung der Paketdaten WP1 und WP2 erfolgen soll. So kann die Übermittlung entweder vor einem Verbindungsaufbau, während einer Verbindung oder nach einem Verbindungsabbau erfolgen. Der Steuerrechner SC wird dazu von der entsprechenden Vermittlungsstelle EX1 oder EX2 über den Zeitpunkt des Fernsprechanrufs, den Zeitpunkt der Verbindungsherstellung und den Zeitpunkt des Verbindungsabbaus informiert. Er übermittelt das Notifizierungssignal NF entweder unmittelbar zum festgelegten Zeitpunkt an den Informationsrechner IS oder er informiert den Informationsrechner IS explizit über Zustandsänderungen einer Fernsprechverbindung.

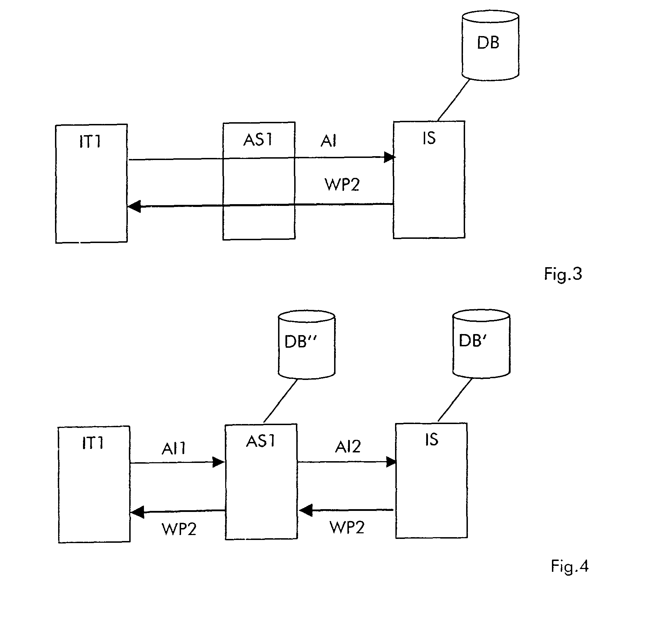

Bisher wurde davon ausgegangen, dass die Internet-Endgeräte IT1 und IT2 aller Teilnehmer S1 und S2 des beschriebenen Dienstes stets angeschaltet sind und die IP-Adressen der Internet-Endgeräte IT1 und IT2 im Informationsrechner IS bekannt sind. Häufig werden diese Internet-Endgräte IT1 und IT2 allerdings nur sporadisch oder zeitweise angeschaltet. Da viele Internet-Endgeräte keine statische IP-Adresse, sondern für jede Internetsitzung neu zugeordnete IP-Adresse besitzen, muss zur Ausführung des beschriebenen Dienstes bekannt sein, wann ein Teilnehmer und unter welcher IP-Adresse sein Internet-Endgerät erreicht werden kann. Anhand der folgenden Zeichnungen Fig.3 und Fig.4 wird dazu jeweils ein Verfahren vorgestellt.

Fig.3 zeigt, aus den vorherigen Zeichnungen bekannt, das erste Internet-Endgerät IT1, den ersten Zugangsrechner AS1, den Informationsrechner IS und die mit dem Informationsrechner IS verbundene Datenbank DB. Ein vom ersten Internet-Endgerät IT1 über den ersten Zugangsrechner AS1 zum Informationsrechner IS gerichteter Pfeil symbolisiert ein Adresssignal A1. Ein umgekehrt vom Informationsrechner IS über den ersten Zugangsrechner AS1 zum ersten Internet-Endgerät IT1 gerichteter Pfeil symbolisiert die aus Fig.2 bekannten zweiten Paketdaten WP2. Wenn das erste Internet-Endgerät IT1 angeschaltet wird, so wird ihm mit der Anmeldeprozedur ins Internet INT eine IP-Adresse zugeteilt. Anschließend informiert das erste Internet-Endgerät IT1 den Informationsrechner IS durch Übermittlung des Adresssignals Al über diese aktuelle IP-Adresse. Diese Adressinformation wird in die Datenbank DB eingetragen. Von diesem Zeitpunkt ab kann der Informationsrechner IS die für den Teilnehmer S1 bestimmten Paketdaten WP2 über den ersten Zugangsrechner AS1 an das entsprechende erste Internet-Endgerät IT1 übermitteln. Der erste Zugangsrechner AS1 beeinflusst die über ihn geführten Datagramme der zweiten Paketdaten WP2 nicht; es erfolgt gegebenenfalls lediglich Protokollumsetzung der unterhalb der Vermittlungsschicht (engl.: network layer) befindlichen Protokollschichten.

Das erste Internet-Endgerät IT1 wiederholt die Übermittlung des Adresssignal Al, solange es angeschaltet ist, innerhalb definierter Zeitabstände. Das wiederholte Übermitteln des Adresssignals Al hat die Funktion eines "Lebenssignals"; empfängt der Informationsrechner IS eine einen definierten Zeitabstand überschreitende Zeit kein weiteres Adresssignal Al eines Internet-Endgeräts IT1 oder IT2, so nimmt er dieses Internet-Endgerät IT1 bzw. IT2 als abgeschaltet an und löscht die entsprechende IP-Adresse aus der Datenbank DB.

Ein Problem eines Dienstes mit automatischer Datenübermittlung liegt darin, dass ein Teilnehmer eines solchen Dienstes unter Umständen unerwünschte Daten nicht autorisierter Absender erhält. Zur Vermeidung der Übermittlung unerwünschter Paketdaten dienen die Zugangsrechner AS1 und AS2 auch als Sicherheitsrechner (engl.: security server), die nur Paketdaten der von dem Teilnehmer S1 bzw S2 abonnierten oder gewünschten Dienste übermitteln.

Wenn ein Teilnehmer S1 oder S2, trotz eingeschaltetem Internet-Endgerät IT1 bzw. IT2, den Empfang der Paketdaten WP2 bzw. WP1 verhindern will, so wird in dem entsprechenden Internet-Endgerät IT1 bzw. IT2 die Funktion zum Übermitteln der Adressinformation Al deaktiviert.

In einer vorteilhaften Weiterbildung der Erfindung findet im Informationsrechner IS eine zeitselektive und/oder empfängerselektive Auswahl der an einen Teilnehmer S1 oder S2 zu übermittelnden Paketdaten WP2 bzw. WP1 statt. So können z.B. verschiedene Informationen für verschiedene Tageszeiten oder verschiedene Informationen für verschiedene Empfänger oder Gruppen von Empfängern in der Datenbank DB gespeichert sein.

In einer weiteren vorteilhaften Weiterbildung entscheidet ein angerufener Teilnehmer S2 erst dann, wenn er den anrufenden Teilnehmer S1 identifiziert hat, welche speziellen Paketdaten WP2 an den anrufenden Teilnehmer S1 oder ob überhaupt Paketdaten WP2 an den anrufenden Teilnehmer S1 übermittelt werden sollen. Dazu übermittelt er über das zweite Internet-Endgerät IT2, beispielsweise nach Erhalt einer Aufforderung zur Eingabe der Auswahl von zu übermittelnden Paketdaten, eine entsprechende Aufforderung zur Übermittlung bestimmter Paketdaten an den Informationsrechner IS. Es ist auch möglich, dass er eine entsprechende Aufforderung, beispielsweise durch Eingabe bestimmter Ziffern, über das zweite Fernsprechendgerät PT2 übermittelt.

Anhand der Fig.4 wird nun beispielhaft ein modifiziertes Verfahren beschrieben, das gegenüber dem unter Fig.3 beschriebenen Verfahren den Vorteil hat, dass durch eine modifizierte Aufgabenteilung des (zentralen) Informationsrechners IS und der Zugangsrechner AS1 und AS2 keine dynamische Adressinformation Al des Internet-Endgeräts IT1 im Informationsrechner IS benötigt wird.

Fig.4 zeigt, aus Fig.3 bekannt, das Internet-Endgerät IT1, den ersten Zugangsrechner AS1, der mit einer dezentralen Datenbank DB" verbunden ist, sowie den aus Fig.3 bekannten Informationsrechner IS, der mit einer zentralen Datenbank DB' verbunden ist. Ein vom Informationsrechner IS zum ersten Zugangsrechner AS1 gerichteter Pfeil und ein von diesem zum ersten Internet-Endgerät IT1 gerichteter Pfeil symbolisieren jeweils die aus Fig.3 bekannten zweiten Paketdaten WP2. Ein vom ersten Internet-Endgerät IT1 zum ersten Zugangsrechner AS1 gerichteter Pfeil symbolisiert eine erste Adressinformation Al1 und ein vom ersten Zugangsrechner AS1 zum Informationsrechner IS gerichteter Pfeil symbolisiert eine zweite Adressinformation A12.

Nachdem das erste Internet-Endgerät IT1 nach Anschalten eine IP-Adresse erhalten hat, übermittelt es mit der ersten Adressinformation Al1 diese IP-Adresse zusammen mit der Rufnummer seines Fernsprechendgeräts PT1 an den Zugangsrechner AS1 und aktiviert damit den genannten Dienst für sich.
Unabhängig davon oder jeweils beim Aktivieren durch einen Teilnehmer S1 informiert der Zugangsrechner AS1 den Informationsrechner IS mit der zweiten Adressinformation A12, welche Teilnehmer über ihn zu erreichen sind.

In der zentralen Datenbank DB' des Informationsrechners IS ist für die Teilnehmer S1 und S2 die IP-Adresse der zugeordneten Zugangsrechner AS1 bzw. AS2 gespeichert. Bei Aufruf des genannten Dienstes , gleichgültig, ob ein Adressat S1 der Paketdaten WP2 ein eingeschaltetes Internet-Endgerät IT1 aufweist, übermittelt der Informationsrechner IS diese Paketdaten WP2 unverzüglich an den zugeordneten Zugangsrechner AS1. Ist dieses erste Internet-Endgerät IT1 eingeschaltet, übermittelt der erste Zugangsrechner AS1 diese Daten unverzüglich an das erste Internet-Endgerät IT1 weiter. Anders als unter Fig.3 beschrieben, ist kein Senden einer Adressinformation Al vom ersten Internet-Endgerät IT1 direkt zum Informationsrechner IS mehr notwendig, da der erste Zugangsrechner AS1 die aktuelle IP-Adresse des Teilnehmers S1 kennt, sobald er angeschaltet ist. Allerdings muss stets dafür gesorgt werden, dass die Zuordnung jedes Teilnehmers zu einem entsprechenden Zugangsrechner in der zentralen Datenbank DB' bekannt ist. Falls das erste Internet-Endgerät IT1 nicht eingeschaltet ist, können die Paketdaten WP2 im ersten Zugangsrechner AS1 für eine festzulegende Zeit gespeichert und von dem Internet-Endgerät IT1 zu gegebener Zeit abgerufen werden.

Bei einem weiter dezentralisierten Verfahren werden die Paketdaten WP1 und WP2 auch teilweise oder ganz in den dezentralen Datenbanken DB" der Zugangsrechner AS1 und AS2 gespeichert. Zur Übermittlung beispielsweise von Paketdaten WP2 an das entsprechendes Internet-Endgerät IT1 ruft der Informationsrechner IS die Paketdaten WP2 bei aktuellem Bedarf vom zweiten Zugangsrechner AS2 ab und übermittelt diese Paketdaten WP2 and den ersten Zugangsrechner AS1. Optional können die in der dezentralen Datenbank DB" gespeicherten Paketdaten WP2 bei der Aktivierung eines Teilnehmers S1 von dem ihm zugeordneten ersten Zugangsrechner AS1 an den (zentralen) Informationsrechner IS übermittelt und in der zentralen Datenbank DB' temporär gespeichert werden, solange der Teilnehmer S1 den beschriebenen Dienst aktiviert hat. Dieses Verfahren ist dann besonders vorteilhaft, wenn einerseits große Datenmengen verwaltet werden müssen und andererseits nur ein kleiner Teil der Teilnehmer den beschriebenen Dienst zeitgleich aktiviert hat.

In einer weiteren Option wird ein nicht-eingeschaltetes Internet-Endgerät IT1 oder IT2 durch den entsprechenden Zugangsrechner AS1 bzw. AS2 benachrichtigt, sobald entsprechende Paketdaten vorliegen. Dazu bedarf es zusätzlicher Wecksignale, die beispielsweise bei einer ISDN-Verbindung über den Signalisierungskanal an die Teilnehmer S1 oder S2 übermittelt werden. Sofort bei Empfang eines solchen Wecksignals starten die Internet-Endgeräte IT1 bzw. IT2 der Teilnehmer dann automatisch die Einschaftprozedur ins Internet. Das Wecksignal kann dabei durch Belegen eines bestimmten Parameters in dem ohnehin eintreffenden SETUP-Signal dargestellt werden.

## Patentansprüche

1. Verfahren zur Durchführung eines Dienstes zur automatischen Übermittlung von Paketdaten an einen Teilnehmer (S1, S2) eines Kommunikationsnetzes, welches ein Paketdatennetz (INT) umfasst, insbesondere eines Internetinformationsdienstes, wobei die zu übermittelnden Paketdaten (WP1, WP2) in einer Netzeinrichtung (IS, DB) des Kommunikationsnetzes gespeichert sind und über das Paketdatennetz (INT) übermittelt werden, **dadurch gekennzeichnet, dass** für den Fall, dass das Kommunikationsnetz auch ein leitungsvermittelndes Fernsprechnetz (TN) umfasst, die Netzeinrichtung (IS) durch einen Fernsprechanruf eines ersten Teilnehmers (S1, S2) an einen weiteren Teilnehmer (S1, S2) dazu veranlasst wird, einem der Teilnehmer (S1, S2) Paketdaten (WP2, WP1) zu übermitteln.

2. Verfahren nach Anspruch 1, **dadurch gekennzeichnet, dass** die Paketdaten (WP2) Information eines anzurufenden oder angerufenen Teilnehmers S2 beinhalten, die einem anrufenden Teilnehmer (S1) übermittelt werden.

3. Verfahren nach Anspruch 2, **dadurch gekennzeichnet, dass** ein angerufener Teilnehmer S2 durch Kommunikation mit der Netzeinrichtung (IS, DB) festlegt, ob Paketdaten (WP2) an den anrufenden Teilnehmer (S1) oder welche Paketdaten (WP2) an den anrufenden Teilnehmer (S1) übermittelt werden sollen.

4. Verfahren nach Anspruch 1, **dadurch gekennzeichnet, dass** die Paketdaten (WP1) Information eines anrufenden Teilnehmers (S1) beinhalten, die einem anzurufenden Teilnehmer (S2) übermittelt werden.

5. Verfahren nach Anspruch 1, **dadurch gekennzeichnet, dass** die Paketdaten (WP1, WP2) in Abhängigkeit des Anrufzeitpunkts, insbesondere abhängig von der Urzeit und/oder dem Datum, unterschiedliche Information enthalten können.

6. Verfahren nach Anspruch 1, **dadurch gekennzeichnet, dass** die Paketdaten (WP1, WP2) in Abhängigkeit von der Telefonnummer desjenigen Teilnehmers (S1, S2), für den die Daten bestimmt sind, unterschiedliche Information enthalten können.

7. Verfahren nach Anspruch 1, **dadurch gekennzeichnet, dass** festgelegt werden kann, ob die Paketdaten (WP1, WP2) vor einer Gesprächsverbindung, während einer Gesprächsverbindung oder nach dem Abbau einer Gesprächsverbindung übermittelt werden.

8. Verfahren nach Anspruch 1, **dadurch gekennzeichnet, dass** die Netzeinrichtung (IS) von jedem angeschaltetem Paketdaten-Endgerät (IT1, IT2) eines Teilnehmers (S1, S2) aktuell über seine Adresse, an die die entsprechenden Paketdaten (WP1, WP2) übermittelt werden sollen, informiert wird (Al).

9. Verfahren nach Anspruch 1, **dadurch gekennzeichnet, dass** die Netzeinrichtung (IS) die zu übermittelnden Paketdaten (WP1, WP2) an einen Internetzugangsrechner (AS1, AS2) übermittelt, der die Adresse eines Paketdaten-Endgeräts (IT1, IT2) des entsprechenden Teilnehmers (S1, S2) ermittelt an die diese Paketdaten (WP1, WP2) übermittelt werden sollen.

10. Kommunikationsnetz, bestehend aus einem Paketdatennetz (INT) und einem leitungsvermittelndes Fernsprechnetz (TN), zur Durchführung eines Dienstes zur automatischen Übermittlung von Paketdaten an Fernsprechteilnehmer (S1, S2) mit folgenden Einrichtungen:
• Triggereinrichtungen (EX1, EX2) zum Triggern eines Steuerrechners (SC) bei Detektion eines Fernsprechanrufs eines Fernsprechteilnehmers (S1) des genannten Dienstes,
• einem Steuerrechner (SC) zum Übermitteln der Rufnummern eines anrufenden Fernsprechteilnehmers (S1) und eines anzurufenden Fernsprechteilnehmers (S2) an einen Informationsrechner (IS) und
• einem Informationsrechner (IS) zur Übermittlung der für den anrufenden Fernsprechteilnehmer (S1) und/oder den anzurufenden Fernsprechteilnehmer (S2) bestimmten, gespeicherten Paketdaten (WP1, WP2) an die entsprechenden Paketdaten-Endgeräte (IT1, IT2).

11. Informationsrechner (IS) zur Übermittlung von Paketdaten (WP1, WP2) an ein Paketdaten-Endgerät (IT1, IT2) mindestens eines an einem Fernsprechanruf beteiligten Fernsprechteilnehmers (S1, S2), mit
• ersten Empfangsmitteln zum Empfang der Rufnummern der Fernsprechteilnehmer (S1, S2),
• Zuordnungsmitteln zum Zuordnen bestimmter Paketdaten (WP1, WP2) zu den Adressen der Paketdaten-Endgeräte (IT1, IT2) und
• Sendemitteln zum Übermitteln der zugeordneten Paketdaten (WP1, WP2) an die entsprechenden Paketdaten-Endgeräte (IT1, IT2).

12. Informationsrechner (IS) nach Anspruch 11, **dadurch gekennzeichnet, dass** zusätzlich weitere Empfangsmittel zum Empfang einer die IP-Adresse enthaltenden Adressinformation (Al) eines Paketdaten-Endgeräts (IT1, IT2) vorhanden sind.

13. Programmmodul zum Ablauf in einem Informationsrechner (IS) zur Durchführung eines Dienstes zur automatischen Übermittlung von Paketdaten an ein Paketdaten-Endgerät (IT1, IT2) mindestens eines an einem Fernsprechanruf beteiligten Fernsprechteilnehmers (S1, S2), mit Programmmitteln zur Steuerung
• von ersten Empfangsmitteln zum Empfang der Rufnummern der Fernsprechteilnehmer (S1, S2),
• der Zuordnung bestimmter gespeicherter Paketdaten (WP1, WP2) zu den IP-Adressen von Paketdaten-Endgeräten (IT1, IT2), die Adressaten der Paketdaten (WP1, WP2) sind und
• von Sendemitteln zum Übermitteln der Paketdaten (WP1, WP2) an die entsprechenden Paketdaten-Endgeräte (IT1, IT2).
